Europäisches Patentamt

European Patent Office

Office européen des brevets

(19)

(11) Publication number : **0 449 664 A2**

(12) # EUROPEAN PATENT APPLICATION

(21) Application number : **91302839.5**

(22) Date of filing : **28.03.91**

(51) Int. Cl.⁵ : **F16P 3/04**

(30) Priority : **29.03.90 GB 9007084**

(43) Date of publication of application :
**02.10.91 Bulletin 91/40**

(84) Designated Contracting States :
**BE CH DE FR GB IT LI NL**

(71) Applicant : **RIGGS AUTOPACK LIMITED**
**Malvern Mill, Waterford Street**
**Nelson, Lancs, BB9 8AQ (GB)**

(72) Inventor : **Fort, Edward Sagar**
**"Ashcroft", Crow Trees Brow, Chatburn**
**Nr. Clitheroe, Lancashire (GB)**

(74) Representative : **W.P. Thompson & Co.**
**Coopers Building, Church Street**
**Liverpool L1 3AB (GB)**

(54) Press.

(57) A press comprises a support body (12) and a hydraulic ram (18) which is slidably disposed in a bore (20) within the support body. The hydraulic ram comprises a piston (44) which is displaceable within the ram in a first direction by application of pressurised hydraulic fluid, and which is displaceable in the opposite direction by means of a compression spring (65). A rod (42) is connected to the piston, and one end of the rod is connected to a tool holder (22) which retains a tool for carrying out a pressing operation.

The hydraulic ram (18) may be displaced into an operative position by pivoting an arm (94), one end of which is pivotally connected to the ram. The displacement may be achieved either manually by means of handle (108) or by a power-operated ram (106).

The hydraulic ram (18) can be moved into a pre-operative position by means of the handle (108) or the ram (106), whereupon a securing pin (76) slidably disposed in the support body is displaced into an aperture (72) in the ram by means of double-acting pneumatic ram (82), thereby locking the ram housing in position and permitting the pressing operation to take place.

EP 0 449 664 A2

FIG. 1

The present invention relates to presses, and in particular, but not exclusively, to presses which are safe to use without a guard.

One known press is described in GB 1,091,061, in which a tool holder is slidable manually in a tool housing into a pre-operative position, whereupon a pneumatically-operated hammer within the housing is displaced into contact with the tool holder which is thereby also displaced, causing the tool to engage a workpiece situated below. The hammer is actuated automatically by a number of mechanically-operated valves, which ensure that the hammer can only be displaced when the tool holder is in its pre-operative position.

Whilst the above press is very useful, and is still widely used, it suffers from a number of disadvantages. Firstly, the hammer can only displace the tool holder in one direction by pneumatic force, and in some cases the tool can become caught in the workpiece, requiring manual intervention and thus reducing productivity. In other words, there is no facility for "stripping" the tool from the workpiece.

Secondly, the press requires a relatively large pneumatic ram in order to generate sufficient force to displace the hammer at a speed which is sufficient for most pressing operations. The pneumatic operation thus effectively limits the pressing force which can be applied. Furthermore, the pneumatic operation makes the press very noisy, which can cause problems with operators of the press.

It is an object of the present invention to provide a press which overcomes the above, and/or other disadvantages with the prior art.

In accordance with the present invention, a press comprises a support body, a fluid-actuated tool holder displacement ram having a ram housing movably mounted with respect to the support body and a piston displaceable within the ram housing in a pressing direction by application of fluid pressure to the ram, a tool holder connected to the piston of the ram and means for displacing the ram housing with respect to the support body.

With the above arrangement, the fluid-actuated ram can be moved into a pre-operative position, and then the piston may be displaced within the ram housing to displace the tool holder in a pressing action.

Preferably, the press further comprises securing means for securing the ram housing in a desired position with respect to the housing, in order to prevent movement of the housing when the piston is displaced. The securing means may comprise a pin mounted on one of the support body and the ram housing, engageable in a recess in the other of the support body and the ram housing. Conveniently, the pin is mounted on the support body, and may be displaceable by means of a fluid-actuated ram.

There may also be means for displacing the tool holder out of its pressing position. These may comprise a spring which is compressed upon displacement of the piston and the tool holder and which expands when the actuating pressure is removed to displace the tool holder and the piston in the opposite direction.

The tool holder displacement ram is preferably hydraulically operated, in order to make its operation quieter.

Preferably, the ram housing is slidably disposed in the support body. There may be biasing means, e.g. a fluid-actuated ram, to bias the housing towards a desired position.

Preferably, the tool holder is slidably mounted within the ram housing.

The press may further comprise an actuating arm pivotally mounted on the support body, the arm being connected to the tool holder displacement ram, whereby pivoting of the arm causes displacement of the ram housing with respect to the support body. The arm may be pivoted manually, e g. by a handle, or may be pivotable by powered means, e.g. by a fluid actuated ram connected to the arm on the opposite side of the pivot from the tool holder displacement ram.

There may be means for automatically controlling the operation of the press which may comprise a pneumatic control unit which receives signals from limit switches, e.g. in the form of poppet valves, in order to determine the position of various components of the press.

By way of example only, a specific embodiment of the present invention will now be described with reference to the accompanying drawings in which:-

Fig. 1 is a side elevation of an embodiment of press in accordance with the present invention;

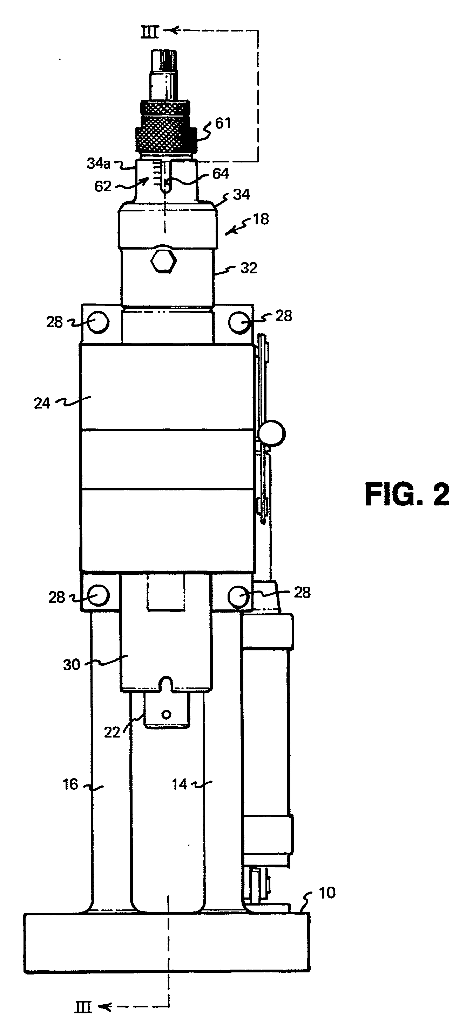

Fig. 2 is a front elevation of the press of Fig 1; and

Fig. 3 is a view looking in the direction of arrows III-III of Fig. 2.

The press comprises a pedestal 10, from the upper surface of which extends a support body 12 having two planar, parallel support flanges 14 16. The support flanges 14, 16 extend from one half of the pedestal and the remainder of the support body 12 overhangs the other half of the pedestal. A tool holder displacement cylinder 18 is slidably disposed in a vertical aperture 20 in the overhanging portion of the support body and is adapted to displace a tool holder 22 (as will be explained) into which a tool (not shown) is fitted in order to work on an article located on the pedestal 10 below.

The overhanging portion comprises a solid support body 24, in which the aperture 20 is located, which is attached to a mounting plate 26 extending from the support flanges 14, 16 by means of four bolts 28.

The tool holder displacement cylinder 18 comprises a lower housing portion 30 which slides in the aperture 20, an intermediate housing portion 32 screw-threadedly connected to the lower portion and an upper housing sleeve portion 34 which sits on top of the intermediate portion and which is provided with an upper tubular extension 34a. The lower housing portion 30 is provided with a cylindrical bore along its length, which is divided into a spring chamber 36 and a tool holder chamber 38 by means of an inwardly extending neck portion 40. A rod 42 extends upwardly from the tool holder chamber 38 through the top of the cylinder 18. The lower half of the rod is cylindrical and engages slidably with the neck 40. The upper half 42a of the rod is externally screw-threaded and engages with the internally threaded bore of an actuating piston 44 which is slidably disposed within the intermediate and upper housing portions. The piston 44 has an enlarged central portion 46, which receives a piston sealing ring 48 in its periphery, and which is slidable in a bore 50. The upward displacement of the piston is limited by an annular shoulder 52 and the downward displacement is limited by means of an annular bushing 54 disposed between the lower and intermediate cylinder portions 30, 32. The bushing 54 also acts as a guide for a cylindrical lower piston portion 56. Similarly, an upper piston portion 58 is slideable in a further bushing 59 in the upper cylinder portion, and against the annular shoulder 52 where it sealingly abuts an O-ring seal 60.

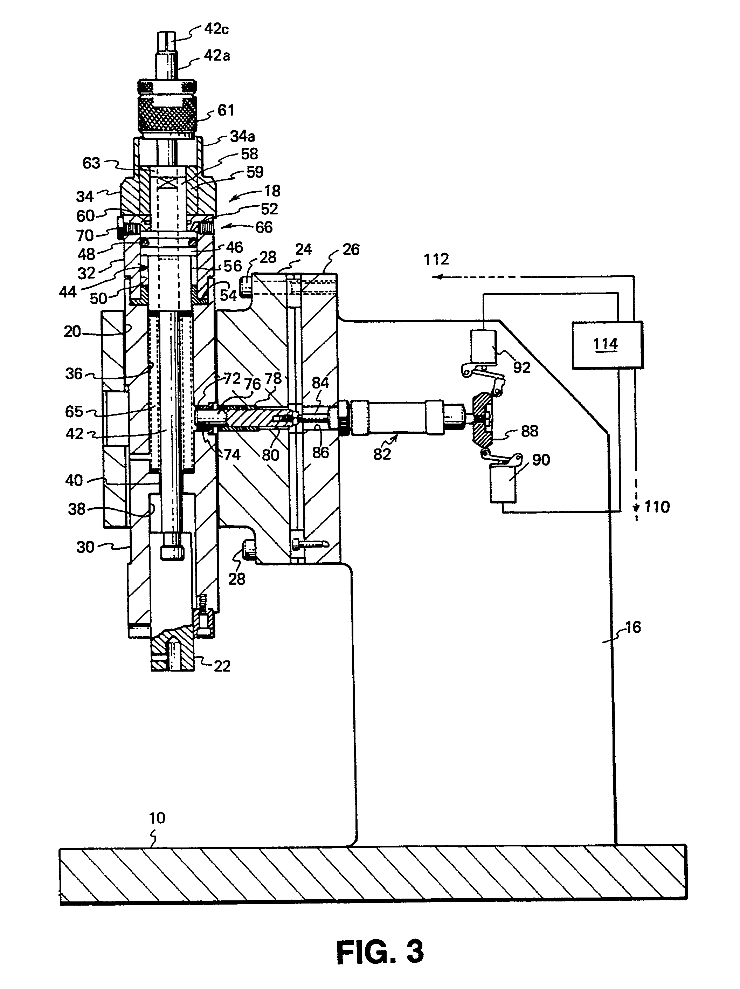

A strong compression spring 65 is located around the rod 42 in the spring chamber 36 and extends between the neck portion 40 and the lower end of the lower piston portion 56. The spring biases the piston 44 into its uppermost position, as illustrated in Fig.3. The piston is displaceable downwardly against the force of the spring by application of pressurised hydraulic fluid to an inlet port 66 in the intermediate housing portion 32 which communicates with the bore 50. A diametrically opposed bore 68 is also provided, but this is closed off by means of a cap 70.

In order to adjust the piston stroke, an internally threaded, knurled adjusting sleeve, of slightly smaller external diameter than the internal diameter of the tubular portion 34a of the upper housing sleeve portion 34 is located on the threaded portion 42a of the rod. Rotation of the sleeve causes it to move along the rod, and the downward displacement of the rod 42, and of the piston 44, can thus be limited, since downward movement of the rod eventually causes the base of the sleeve 61 to abut the bushing 59 in which the piston is slidable. An adjustment of up to 25mm may be achieved, and a graduated scale 62 on the upper cylinder housing portion 34 against which the bottom face of the sleeve 61 is adjusted, is provided for this purpose. The bottom face of the sleeve 61 may be viewed in its lowermost position by means of a slot 64 in the tubular portion 34a of the upper housing sleeve portion 34.

The displacement of the tool holder 22 can also be adjusted, by rotating the rod 42 within the piston 44, thereby advancing or retracting the tool holder as required. The rotation of the rod 42 is facilitated by a square drive 42c at the uppermost end of the rod, and the desired position of the tool holder is locked by means of a locking collar 63 which is threadedly mounted on the rod 42 and, in use, abuts the upper end of the piston 44.

It will also be noted that one side of the lower portion 30 of the housing is provided with an aperture 72 in which a bushing 74 is secured. The bushing is adapted to receive a securing pin 76 which is itself slidably disposed in a bushing 78 in an aperture 80 of the support body 24. The pin is displaceable by means of a double-acting pneumatic ram 82 mounted on the mounting plate 26 and whose piston rod 84 extends through an aperture 86 in the mounting plate 26 in order for it to be secured to the securing pin 76. The piston rod 84 extends out of both ends of the ram, and the opposite end is provided with a disc 88 which is adapted to contact two limit switches 90, 92 in the form of poppet valves which respectively detect whether the ram 82 is fully extended or fully retracted. It will be apparent that the securing pin 76 can only be inserted into the bushing 74 in the cylinder housing when the cylinder housing 18 is in its lowermost position, as illustrated in the figures, when the bushings 74, 78 are aligned.

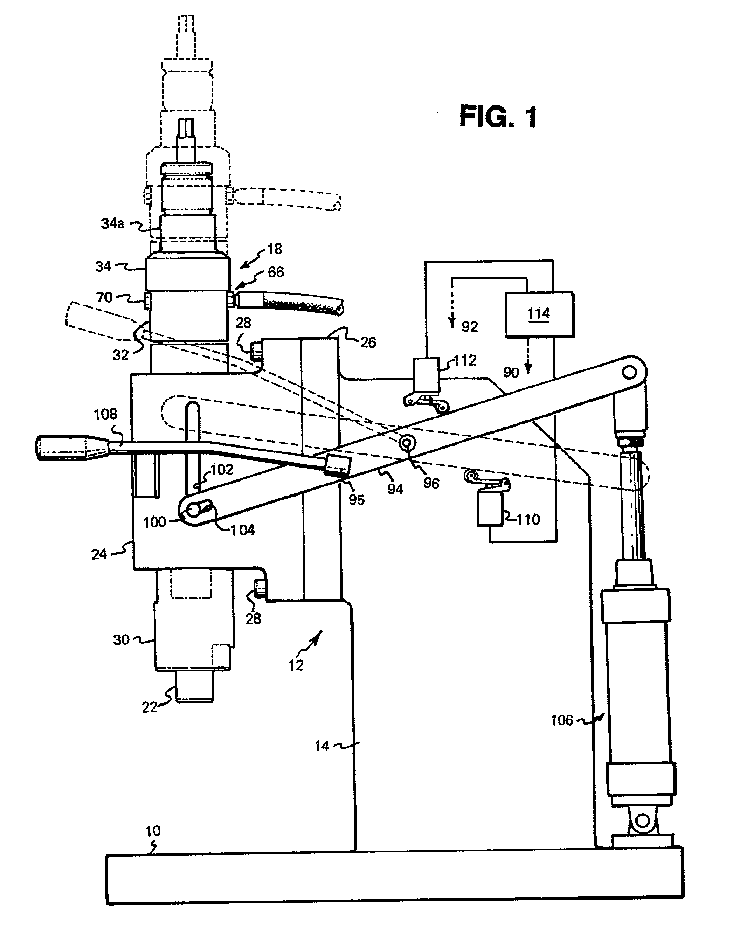

The cylinder housing is displaceable by means of a pivot arm 94 which is pivoted at its centre by securing the arm on a plain bush bearing 96 pressed into the arm and which is pivotally mounted on a pivot pin 98 secured to the outer face of the support flange 14. One end of the pivot is pivotally connected to a pin 100 secured to the lower housing portion and which passes through a slot 102 in the side wall of the support body 24. The pin passes through a slot 104 in the pivot arm 94, the slot permitting movement. The opposite end of the pivot arm 94 is pivotally connected to the piston rod of a pneumatic ram 106 which is itself pivotally connected to the pedestal 10. The pivot arm 94 is pivoted by means of an actuating handle 108 which is secured to the pivot arm 94 at a mounting 95. Movement of the handle 108 thus causes the pivot arm to pivot. The piston of the pneumatic ram 106 is biased into a retracted position a pressure of, for example. 2 bar, (although this is adjustable to allow for various tool weights), thereby counterbalancing the weight of the displacement cylinder, and biasing it into its uppermost position, as shown in chain dot in Fig. 1. Counterbalancing is maintained by two pressure relief valves in a pneumatic control unit (not shown) which maintain a balance of air on both sides of the piston in cylinder 106.

The handle 108 is movable from an extreme upward position (shown in chain dot in Fig. 1) in which the cylinder housing has been moved into its extreme upward position, and an extreme downward position (shown in full lines in Fig. 1) in which the housing has been moved into its extreme downward position. As seen in Fig. 1, further limit switches 110, 112, also in the form of poppet valves, are adapted to abut the pivot arm 94 when the cylinder housing is in its upper and lower positions respectively.

In use, a tool (not shown) is secured in the tool holder, and the height of the tool above a workpiece situated on the pedestal and the stroke of the piston 44 are adjusted as described previously, by rotating the rod 42 and by adjusting the position of the sleeve 61 on the rod respectively. In practice, the press will normally be required to carry out an identical operation on a plurality of workpieces, so that only a single initial adjustment need normally be made. At this point, the actuating handle 10b and the cylinder housing are in their uppermost positions (shown in chain dot in Fig. 1) by virtue of the counterbalance pressure applied to the pneumatic cylinder 106. The limit switch 110 is contacted by the pivot arm 94 in this position, and can give a pneumatic signal to this effect during automatic or semi-automatic operation to a pneumatic control unit 114, which controls the application of hydraulic and pneumatic pressures to the hydraulic and pneumatic components of the press.

The actuating handle 108 is then manually pulled downwardly, until it and the cylinder housing 18 reach their lowermost positions (shown in full lines in Fig. 1).

As it is pulled downwardly, the pivot arm 94 disengages from the limit switch 110. In the manually-operated mode described herein, the switch 110 plays no part, but as will become apparent later, when the apparatus is used in an automatic or semi-automatic mode it sends a signal to the control unit 114 when the cylinder housing is in its uppermost position. When the handle 108 and pivot arm 94 are in their lowermost position, the pivot arm 94 contacts the limit switch 112 which gives a signal to the control unit 114. The control unit thus determines that the cylinder housing 18 is in its lowermost position, and actuates the pneumatic ram 82, thereby inserting the securing pin 76 in the bushing 74 in the aperture 72 of the housing, which prevents further relative movement of the housing 18 and the support body 12. When the ram 82 is extended, its disc 88 contacts the limit switch 90, which thus confirms to the control unit that the securing pin is in place. Upon receipt of the signal, the control unit actuates a valve (not shown) to allow pressurised hydraulic fluid to enter the inlet port 66 in the housing. The fluid acts upon the enlarged central portion 46 of the piston, and the piston is thus rapidly displaced downwards, against the force of the compression spring 65, which is thereby compressed. The stroke of the piston is governed by the position of the threaded sleeve 61 on the threaded portion 42a of rod 42 (subject to the maximum stroke determined by engagement of the piston with the bushing 54), and thus the tool holder 22 and the tool secured therein are displaced by a distance equal to the stroke of the piston, since the rod 42 and the piston 44 are screwthreadedly connected, thereby performing the desired operation on the workpiece located on the pedestal below. During the operation, the position of the cylinder housing is held constant by the securing pin 76.

The control unit applies the hydraulic pressure for a predetermined period. Upon release of the pressure, the spring 65 extends once again, automatically displacing the piston, tool holder and tool upwardly. After a predetermined period following the release of the pressure, the control unit retracts the pneumatic ram 82, thereby withdrawing the securing pin 76 from the bushing, and permitting movement of the cylinder housing relative to the support body 12. When the ram is fully retracted, its disc contacts the limit switch 92 which thus confirms to the control unit that the pin 76 is fully retracted. The cylinder housing 18 may then be moved upwardly by means of the handle 108, as assisted by the counterbalance cylinder 106.

The arrangement illustrated is thus a safe apparatus, since it can not be operated accidentally, but only when the tool is in its pre-operative position, in which it is spaced from the workpiece at a very short distance. Also, since the main pressing operation is carried out hydraulically rather than pneumatically, the press is much quieter than conventional presses.

The invention is not restricted to the details of the foregoing embodiment. In another embodiment, by utilising the pneumatic cylinder 106, the actuating handle 108 can be dispensed with, and instead, or in addition, the control unit is arranged to apply pressurised air to either side of the cylinder piston, as appropriate, in order to raise or lower the cylinder housing 18 at the appropriate times in the operating cycle. The handle 108 can thus be dispensed with or can remain unused, and replaced by a "Start" button which, when depressed, induces one complete pressing cycle of the apparatus without any manual effort. The limit switch 110 is used in this case to supply a signal when the cylinder housing has been raised to its uppermost position, as outlined previously.

Appropriate adjustment of the control unit may also be effected to displace the cylinder housing 18 into its lowermost position, as secured by bolt 76, and to repeatedly displace the tool holder 22 downwards and upwards, without raising the housing between successive toolholder displacements, as required in some pressing operations.

## Claims

1. A press comprising a support body (12), a fluid-actuated tool holder displacement ram (18) having a ram housing (30) movably mounted with respect to the support body and a piston (44) displaceable within the ram housing in a pressing direction by application of fluid pressure to the ram, a tool holder (22) connected to the piston of the ram and means (94,106,108) for displacing the ram housing with respect to the support body.

2. A press as claimed in claim 1, wherein the ram housing (30) is slidably disposed with respect to the support body (12).

3. A press as claimed in claim 2, wherein the ram housing (30) is slidably disposed within a bore (20) in the support body.

4. A press as claimed in any of the preceding claims, further comprising securing means (76) for releasably retaining the ram housing (30) in a pressing position with respect to the support body (12).

5. A press as claimed in claim 4, wherein the securing means comprises a pin (76) mounted on one of the support body and the ram housing, engageable in a recess (72) in the other of the support body and the ram housing.

6. A press as claimed in claim 5, wherein the pin is mounted on the support body (12).

7. A press as claimed in claim 5 or claim 6, wherein the pin (76) is displaceable by means of a fluid-actuated ram (82).

8. A press as claimed in claim 7, wherein the fluid-actuated ram (82) comprises a pneumatic ram.

9. A press as claimed in any of claims 4 to 8, further comprising means for preventing fluid pressure from being applied to the piston (44) when the ram housing (30) is not retained in a pressing position by the securing means.

10. A press as claimed in claim 9, wherein the means for preventing fluid pressure from being applied to the piston (44) when the ram housing (30) is not retained in the pressing position comprises one or more detectors (90,92) actuated upon engagement and/or disengagement of the securing means, and control means (114) responsive to signals from the or each detector and adapted to control application of fluid pressure to the ram (18).

11. A press as claimed in any of the preceding claims, further comprising means (65) for displacing the tool holder (22) out of its pressing position.

12. A press as claimed in claim 11, wherein the means for displacing the tool holder out of its pressing position comprise a spring (65) which is compressed upon displacement of the piston (44) and the tool holder (22), and which expands when the actuating pressure is removed.

13. A press as claimed in any of the preceding claims, wherein the tool holder displacement ram (18) is hydraulically operated.

14. A press as claimed in any of the preceding claims, further comprising biassing means (106,94) to bias the housing (18) towards a desired position.

15. A press as claimed in claim 14, wherein the biassing means to bias the housing towards a desired position comprises a fluid-actuated ram (106).

16. A press as claimed in any of the preceding claims, further comprising an actuating arm (94) pivotally mounted on the support body (12), the arm being connected to the tool holder displacement ram (18), whereby pivoting of the arm causes displacement of the ram housing (30) with respect to the support body (12).

17. A press as claimed in claim 16, wherein the arm (94) is pivotable manually.

18. A press as claimed in claim 16 or claim 17, wherein the arm (94) is pivotable by powered means (106).

19. A press as claimed in claim 18, wherein the arm is pivotable by a fluid-actuated ram (106) connected to the arm (94) on the opposite side of the pivot (98) from the tool holder displacement ram.

20. A press as claimed in any of the preceding claims, further comprising means for automatically controlling all or some of the operation of the press.

21. A press as claimed in claim 20, wherein the automatic control means comprise a pneumatic control unit which receives signals from limit switches (90,92,110,112).

22. A press as claimed in claim 21, comprising limit switches (90,92,110,112) to determine the position of one or more movable components of the press.

FIG. 1

FIG. 2

**FIG. 3**